# EUROPEAN PATENT APPLICATION

(11) **EP 2 979 824 A2**
(43) Date of publication of application: **03.02.2016**
(21) Application number: 15179211.6
(22) Date of filing: 31.07.2015
(51) Int. Cl.: B25J 9/12, B25J 19/00

(54) **ROBOT**

(30) Priority: 01.08.2014 JP 2014158107
(71) Applicant: Kabushiki Kaisha Yaskawa Denki, Kitakyushu-shi, Fukuoka 806-0004 (JP)
(72) Inventor: TOMINAGA, Ryuichiro, Kitakyushu-shi, Fukuoka 806-0004 (JP); ICHIBANGASE, Atsushi, Kitakyushu-shi, Fukuoka 806-0004 (JP); TANAKA, Kentaro, Kitakyushu-shi, Fukuoka 806-0004 (JP)
(74) Representative: Grünecker Patent- und Rechtsanwälte PartG mbB

(57) **Abstract**

A robot (10, 100) according to an embodiment includes a lower arm (13), an upper arm (14), an actuator (35, 36), and a brake (50). The upper arm (13) is supported by the lower arm (13), and includes a bottom portion (141) having a through hole (142) and an arm portion (140) extending from the bottom portion (141) avoiding the through hole (142). The actuator (35, 36) includes an output shaft (361) and a rotor (362) coupled thereto. The brake (50) is installed on the end surface of the actuator (35, 36) opposite to the side from which the output shaft (361) projects and acts on a part of the rotor (362) to brake the actuator (35, 36). Virtual space (VS) is obtained by parallel displacement of a region corresponding to the through hole (142) in the extending direction of the arm portion (140). The actuator (35, 36) is installed on the arm portion (140) on the side of the virtual space (VS), with the posture of the actuator being such that the virtual space (VS) and the brake (50) do not overlap each other.

## Description

### BACKGROUND

### 1. Field

The disclosed embodiment relates to a robot.

### 2. Description of the Related Art

Articulated robots in the past transmit torque of an actuator, such as a motor which is stored in an arm, to a moving part via a belt or the like. The actuator typically includes a brake in order to hold the posture of the arm during a servo-off and power-off state, and to stop the robot in emergency (see JP 2011-024406 A, for example).

In such an actuator with a brake, an actuator body, the brake, and an encoder that detects rotation of the actuator are arranged in series coaxially along a common axis.

### SUMMARY

In the above-described structure of the past, however, the entire length of the actuator becomes longer in an axial direction, because of the coaxial arrangement of the actuator body, the brake, and the encoder. If, therefore, the axis of the actuator is arranged in a direction, e.g., orthogonal to an extending direction of the arm, the actuator projects from the arm and, due to such projection of the actuator, necessary space for cables and tubes to be passed through can hardly be secured.

An aspect of an embodiment has been achieved in view of the above problem, and an object of the present invention is to provide a robot that can secure space in the vicinity of the arm.

A robot according to an aspect of an embodiment includes a lower arm, an upper arm, an actuator, and a brake. The upper arm is supported by the lower arm and includes a bottom portion having a through hole and an arm portion extending from the bottom portion avoiding the through hole. The actuator includes an output shaft and a rotor coupled to the output shaft. The brake is installed on an end surface opposite to the side from which the output shaft of the actuator projects, and acts on a part of the rotor to brake the actuator. The actuator is arranged on the arm portion on the side of virtual space with the posture of the actuator being such that the virtual space and the brake do not overlap each other, the virtual space being obtained as a result of parallel displacement of a region corresponding to the through hole in the extending direction of the arm position.

According to the aspect of the embodiment, it is possible to secure space in the vicinity of the arm.

### BRIEF DESCRIPTION OF THE DRAWINGS

FIG. 1 is an explanatory view illustrating an overview of a robot according to an embodiment;
FIG. 2 is a perspective view of the entire robot;
FIG. 3A is a schematic cross-sectional plan view of the robot according to a first embodiment;
FIG. 3B is an enlarged cross-sectional view seen in a direction of line IIIB-IIIB of FIG. 3A;
FIG. 4A is a schematic perspective view of an actuator and a brake;
FIG. 4B is a schematic cross-sectional plan view of the actuator and the brake;
FIG. 5A is a schematic cross-sectional plan view of the robot according to a second embodiment; and
FIG. 5B is an enlarged cross-sectional view seen in a direction of an arrow VB-VB of FIG. 5A.

### DETAILED DESCRIPTION

An embodiment of a robot disclosed in this application will be described in detail below by referring to the accompanying drawings. It is not intended to limit the present invention by the embodiment described below.

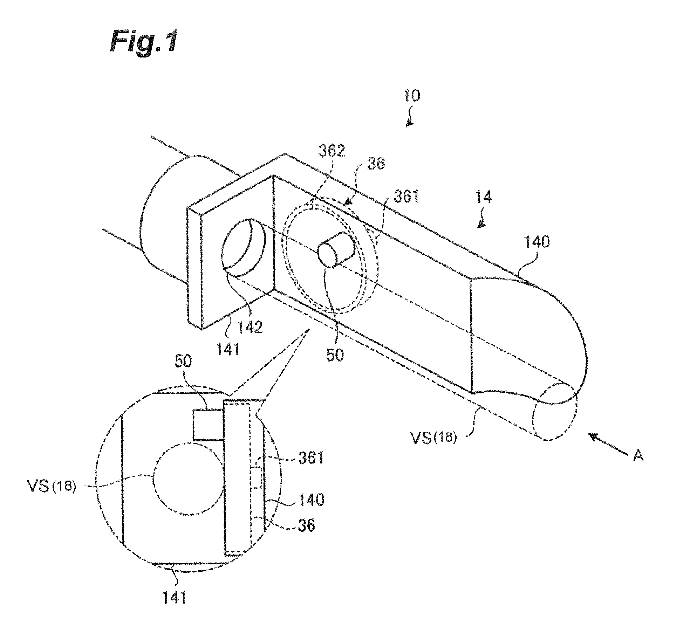

First, an overview of a robot according to the embodiment will be described below by referring to FIG. 1. FIG. 1 is an explanatory view illustrating a robot according to the embodiment. In FIG. 1, a portion illustrated in a balloon represents a view seen in a direction of an arrow A.

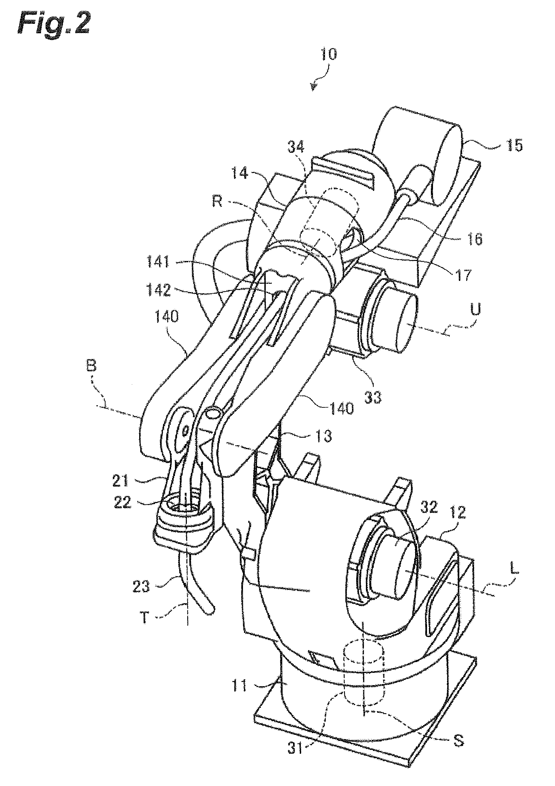

As illustrated in FIG. 1, a robot 10 according to the embodiment includes a lower arm 13 (see FIG. 2), an upper arm 14, an actuator 36, and a brake 50. The lower arm 13 supports the upper arm 14.

The upper arm 14 includes a bottom portion 141 and an arm portion 140. The bottom portion 141 has a through hole 142. The arm portion 140 extends from the bottom portion 141, avoiding the through hole 142.

The upper arm 14 is supported on the base end side thereof by the lower arm 13 (see FIG. 2). The actuator 36 includes an output shaft 361 and a rotor 362. The output shaft 361 is coupled to the rotor 362 and is rotated around the shaft by the rotation of the rotor 362. The actuator 36 is formed in a flat shape.

The brake 50 is installed on the end surface of the actuator 36 opposite to the side from which the output shaft 361 projects. The brake 50 acts on a part of the rotor 362 to brake the actuator 36.

As illustrated in FIG 1, the actuator 36 is arranged on the arm portion 140 on the side of virtual space VS, which is obtained as a result of parallel displacement of a region equivalent to the through hole 142 of the bottom portion 141 in the extending direction of the arm portion 140, with the posture of the actuator 36 being such that the virtual space VS and the brake 50 do not overlap each other.

According to the robot 10 of the embodiment, therefore, the brake 50 does not obstruct the virtual space VS, and cables and pipes (hereinafter referred to as "cables") can pass through the virtual space VS. That is, the space to pass the cables through can be secured in the vicinity of the arm (the upper arm 14 in the example of FIG. 1).

As described above, it has been difficult to secure space in the vicinity of the arm in the structure of the past, because the arm projects from the actuator. The cables are therefore arranged outside the arm, which leads to problems such as interference of the cables on the equipment, a need for protection of the cables, and restriction of a movable range of the robot by the cables. Larger arms, therefore, are required to secure the space in the vicinity of the arms in the past structure.

With the robot 10 according to the embodiment, the above problems of the interference to the equipment, the protection of the cables, the restriction of the movable range of the robot, etc. can be eliminated, because the space can be secured in the vicinity of the arms.

In addition, the appearance of the robot 10 according to the embodiment can be improved, as the cables are not exposed outside the arms. That is, the robot with high design property can be provided. Further, workload of rigging the cables can be reduced.

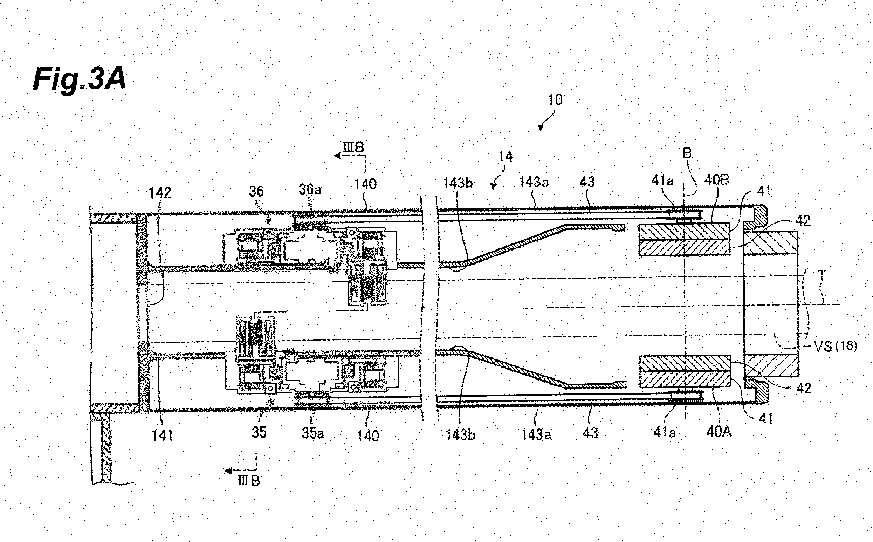

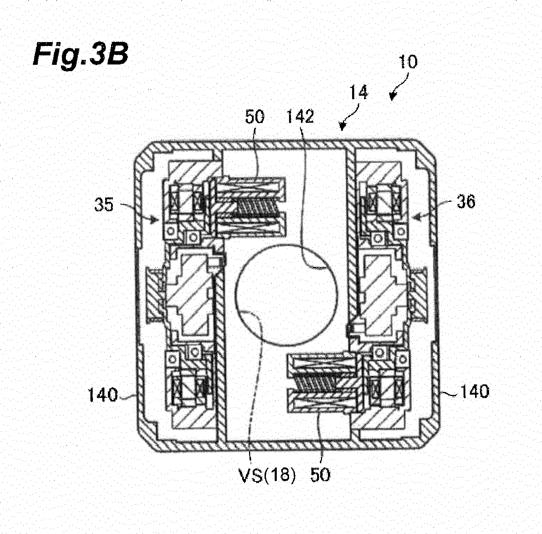

In the robot 10 of the embodiment, the upper arm 14 includes a pair of arm portions 140, 140. The arm portions 140, 140 are arranged such that actuators 35, 36 face each other. The brakes 50 are arranged alternately. This structure will be described later in connection with FIGS. 3A and 3B.

The robot 10 according to the embodiment also includes speed reducers 40A, 40B, which are provided on the tip end side of the arm portions 140, and belts 43 that transmit rotative power generated by the output shaft 361 of the actuators 35, 36 to the speed reducers 40A, 40B. Such a structure will also be described later in connection with FIGS. 3A and 3B.

The brake 50 may be divided into a brake disc portion 51, an armature 52b, and a field core portion 53, with only the field core portion 53 arranged not to overlap the virtual space VS.

Next, an overall structure of the robot 10 is described by referring to FIG. 2. FIG 2 is a perspective view of the entire robot 10. The robot 10 is a so-called articulated robot. In FIG. 2, an arc-welding robot (the robot 10) is described as an example.

As illustrated in FIG. 2, the robot 10 includes a turning base 12 that is installed on a base 11 placed on the floor or the like and installed turnably around a vertical axis (S-axis). A lower arm 13 is supported rotatably around a horizontal axis (L-axis) of the turning base 12.

The upper arm 14 is rotatably supported around a horizontal axis (U-axis) at the upper end of the lower arm 13. The upper arm 14 has, at the tip end thereof, a pair of arm portions 140, 140, a swinging body 21, and a rotating body 22. The pair of arm portions 140, 140 is rotatably installed around the central axis (R-axis) in a longitudinal direction of the upper arm 14. The swinging body 21 is supported rotatably around an axis (B-axis) and swings around the axis (B-axis) that runs orthogonal to the axis R at the tip end of the arm portions 140, 140. The rotating body 22 rotates around a rotational axis (T-axis) at the tip end of the swinging body 21.

A welding torch 23 is attached to the rotating body 22. A wire feeding device 15 is fixed at the rear end of the upper arm 14. A welding wire is supplied from a wire reel (not illustrated) to the wire feeding device 15. The wire feeding device 15 feeds the welding wires to the welding torch 23 via a conduit cable (the cables) 16.

The conduit cable 16 extends in parallel with the R-axis along the side surface of the upper arm 14 and is drawn into the upper arm 14 through an opening 17 that is formed on the side surface of the upper arm 14. The conduit cable 16 may run through and is protected by a protective tube that is formed, for example, by covering a coil spring with resin.

As illustrated in FIG. 2, the arm portions 140, 140 are in a forked shape. As mentioned above, the conduit cable 16, which has entered the interior of the upper arm 14 from the opening 17, passes through the through hole 142 formed in the bottom portion 141 of the arm portion 140, and passes the virtual space VS (see FIG 1) to reach the swinging body 21.

Actuators 31 to 36 are installed at joint portions of the lower arm 13 and upper arm 14 (see FIG. 3A for the actuators 35 and 36). Each of the actuators 31 to 36 is provided with an encoder and a speed reducer. Such a robot 10, therefore, can perform various multiaxial operations by controlling the operations of the individual axes (the S-axis, the L-axis, the U-axis, the R-axis, the B-axis, and the T-axis) based on operating instructions from a control device (not illustrated).

### (First Embodiment)

A robot 10 according to a first embodiment will be described by referring to FIGS. 3A to 4B below. FIG. 3A is a schematic cross-sectional plan view of the robot 10 according to the first embodiment. FIG. 3B is an enlarged cross-sectional view seen in a direction of line IIIB-IIIB of FIG. 3A.

As illustrated in FIG. 3A, the upper arm 14 is supported by the lower arm 13 on the base end side. The upper arm 14 includes the bottom portion 141 and a pair of arm portions 140, 140. The bottom portion 141 has the through hole 142 formed approximately in the center of the bottom portion 141. Although not illustrated, the cables such as the conduit cable 16 (see FIG. 2) are inserted into the through hole 142 and passed through the through hole 142 to the arm portions 140, 140.

The pair of arm portions 140, 140 extends approximately in parallel with each other from the bottom portion 141 avoiding the through hole 142. Each arm portion 140, 140 has a front surface 143a and a rear surface 143b facing each other at an interval. The front surface 143a and the rear surface 143b are formed approximately in parallel with each other from the base end side. The interval between the front surface 143a and the rear surface 143b gradually becomes narrower toward the tip end side.

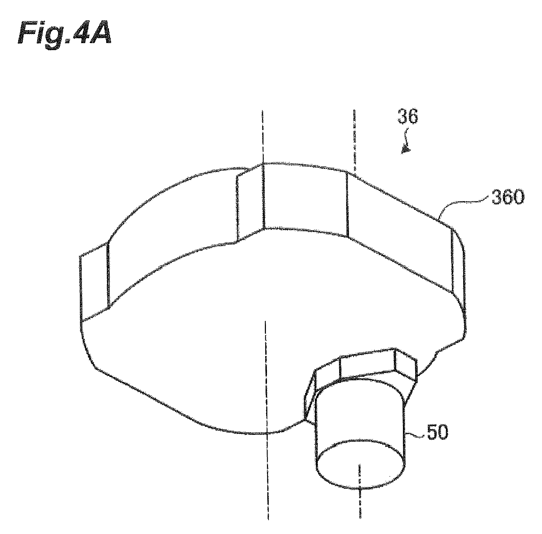

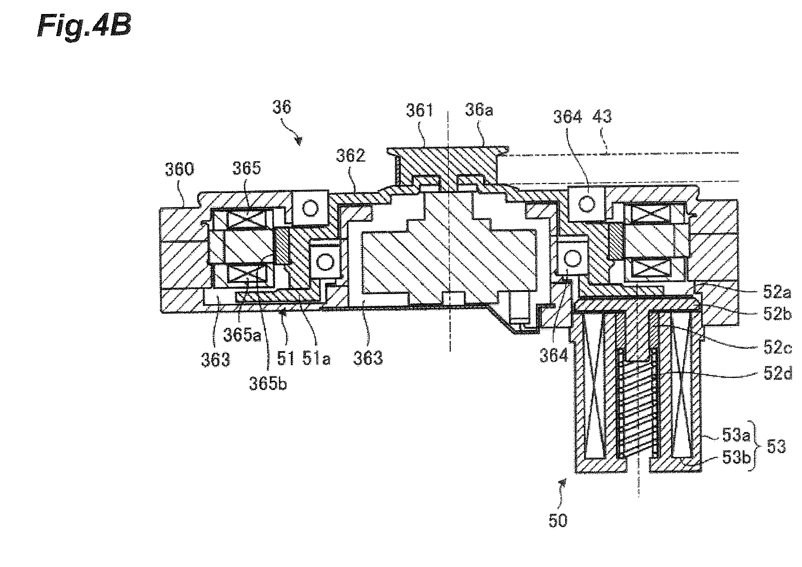

An actuator 35 is provided between the front surface 143a and the rear surface 143b on the base end side of one arm portion 140 of the pair of arm portions 140, 140. An actuator 36 is provided facing the actuator 35 between the front surface 143a and the rear surface 143b on the base end side of the other arm portion 140. As mentioned above, the actuators 35, 36 are provided at the joint portions of the upper arm 14. Details of the actuators 35, 36 will be described later in connections with FIGS. 4A and 4B.

A speed reducer 40A is provided on the tip end side of one arm portion 140 of the pair of arm portions 140, 140. The speed reducer 40A includes an input shaft 41 and an output shaft 42. The input shaft 41 includes a pulley 41 a. Rotative power is transmitted to the input shaft 41 via a pulley 35a and a belt 43 of the actuator 35. The output shaft 42 is arranged coaxially with the B-axis of the robot 10 to cause the swinging body 21 (see FIG. 2) to rotate around the B-axis.

A speed reducer 40B is arranged on the tip end side of the other arm portion 140. Similar to the speed reducer 40A mentioned above, the speed reducer 40B includes an input shaft 41 and the output shaft 42. The input shaft 41 includes a pulley 41a. Rotative power is transmitted to the input shaft 41 via a pulley 36a and the belt 43 of the actuator 36. The output shaft 42 is arranged coaxially with the T-axis of the robot 10 to cause the rotating body 22 (see FIG. 2) to rotate around the T-axis.

The virtual space VS obtained by parallel displacement of the region corresponding to the through hole 142 of the bottom portion 141 in the extending direction of the arm portion 140 is located between the pair of arm portions 140, 140 in the upper arm 14.

A pipe 18, for example, may be provided between the pair of arm portions 140, 140 to physically separate the inside from the outside of the virtual space VS, and such pipe 18 may form the virtual space VS.

As illustrated in FIG. 3B, brakes 50, 50, which will be described later, are installed on the end surfaces of the actuators 35, 36 that have been arranged on the pair of arm portions 140, 140, respectively, in such a manner that the brakes 50, 50 project from the end surface. The brakes 50, 50 are arranged alternately so as not to overlap the virtual space VS that extends from the through hole 142. That is, the brake 50 installed on the actuator 36 and the brake 50 installed on the actuator 35 are arranged to sandwich the virtual space VS.

As shown above, since the actuators 35, 36, which have been provided at the pair of arm portions 140, 140, are arranged to face each other, the actuators 35, 36 are arranged so as not to overlap the virtual space VS. The brakes 50, 50 can be arranged away from the virtual space VS since the brakes 50, 50 are arranged alternately.

Here, the actuator 36 (or the actuator 35) and the brake 50 are described. FIG. 4A is a schematic perspective view of the actuator 36 and the brake 50. FIG. 4B is a schematic cross-sectional plan view of the actuator 36 and the brake 50. In the description below, the actuator 36 that drives the swinging body 21 (see FIG. 2) will be described as an example of the two actuators 35, 36.

As illustrated in FIG 4A, the actuator 36 is apparently flat (e.g., a length in the direction of the output shaft is shorter than that in a direction approximately perpendicular to the output shaft). The actuator 36 includes a casing 360 having end surfaces facing each other. One end surface has an output shaft 361 (see FIG. 4B and the like). On the other end surface, the brake 50 is installed. The brake 50 is installed at a position in parallel with the output shaft 361, and at a position of another shaft different from the output shaft 361 (at a position shifted from the output shaft 361). As illustrated in FIG. 3B, the central axis line of the output shaft 361 may run through the virtual space VS.

As illustrated in FIG. 4B, the actuator 36 includes a casing 360, the output shaft 361, a rotor 362, and a motor electromagnetic unit 365. In the description below, a servo motor is described as an example of the actuator 36.

The output shaft 361 is provided projecting from one end surface of the actuator 36. The output shaft 361 rotates around the rotational axis by the rotation of the rotor 362. As mentioned above, the pulley 36a is coupled to the output shaft 361. The belt 43 is looped between the pulley 36a and the pulley 41a of the speed reducer 40B (see FIG. 3A). The output shaft 361 transmits the rotative power to the speed reducer 40B via the belt 43 hang between the pulleys 36a, 41 a.

The rotor 362 is arranged in a hollow portion 363 of the casing 360. The rotor 362 is provided substantially integral with the output shaft 361. The output shaft 361 is therefore rotated around the rotational axis. A ball bearing 364, for example, may be provided on the outer and inner peripheral surfaces of the rotor 362. The rotor 362 rotates smoothly by the ball bearing 364.

The motor electromagnetic unit 365 is provided on the outer periphery of the rotor 362 in the hollow portion 363 of the casing 360. The motor electromagnetic unit 365 includes a coil 365a and a magnet 365b. One of the coil 365a and the magnet 365b acts as a moving component and the other acts as a fixed component, and the moving component side is rotated. Accordingly, the rotor 362 is rotated.

The brake 50 is installed to the end surface opposite to the side from which the output shaft 361 projects of the end surfaces of the actuator 36.

As illustrated in FIG. 4B, the brake 50 includes a brake disc portion 51, a brake lining 52a, an armature 52b, a collar 52c, a spring 52d, and a field core portion 53. The brake disc portion 51 includes a brake disc 51a. The brake disc 51 a is attached to the end portion of the rotor 362 and rotated in association with the rotation of the rotor 362.

The brake lining 52a is provided on the surface opposite to the brake disc 51a of the armature 52b. A lower column portion of the armature 52b is fitted in the collar 52c having a cylindrical shape. The armature 52b is slidably guided in an axial direction by the collar 52c.

The collar 52c is fixed with the field core portion 53. The spring 52d, which is provided as an energizing member, energizes the armature 52b toward the side of the brake disc 51a.

The field core portion 53 includes a cylindrical casing 53a, and a cylindrical coil 53b provided in the casing 53a. The spring 52d is provided inside the coil 53b across the inner periphery of the casing 53a.

In such a brake 50, when the electric power is supplied, the armature 52b is sucked toward the direction away from the brake disc 51a by the suction force of the coil 53b of the field core portion 53. When the energization is released, the spring 52d, which has been against the suction force of the coil 53b, of the brake 50 pushes the brake lining 52a toward the side of the brake disc 51a via the armature 52b.

In this way, the brake 50 stops the rotation of the brake disc 51 a. The brake 50 then stops the rotation of the brake disc 51a to stop the rotation of the rotor 362. That is, the brake 50 brakes the rotor 362.

As a result, the brake 50 can hold the posture of the arms during the servo-off time and the power-off time of the actuator (servo motor). The brake 50 can also be made to function as an emergency brake of the robot 10.

As described above, the robot 10 according to the first embodiment allows passing of the cables through the virtual space VS, because the brake 50 does not interfere with the virtual space VS. That is, the space to pass through the cables can be secured in the vicinity of the arms.

Further, in the robot 10 according to the first embodiment, the interference to other components can be prevented, as the space can be secured in the vicinity of the arms. In addition, the protection of the cables is not necessary. Further, the restriction of the movable range of the robot 10 is eased.

Further, in the robot 10 according to the first embodiment, the appearance can be improved, as the cables are not exposed outside the arm portions 140, 140. That is, the robot 10 has a high design property. Further, workload of rigging the cables can be reduced.

### (Second Embodiment)

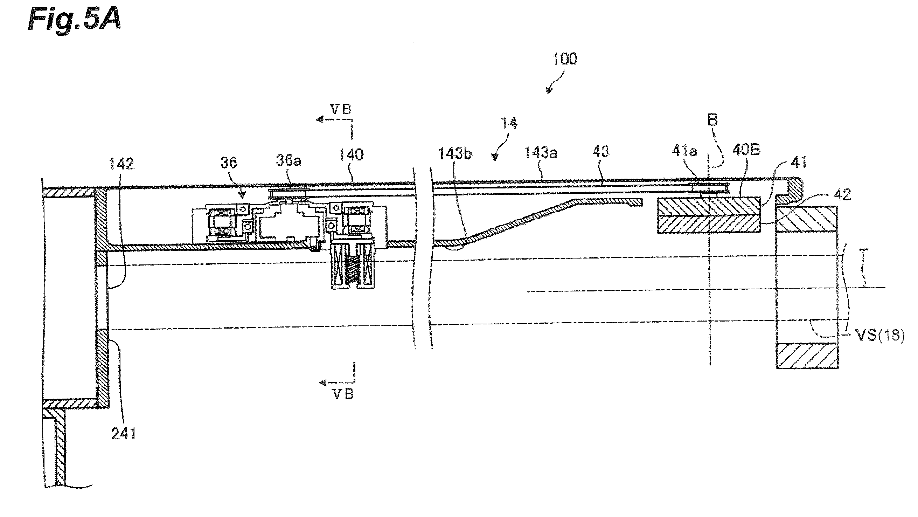

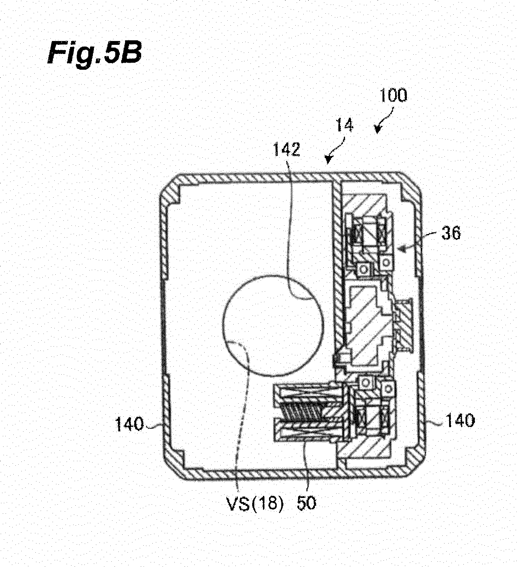

Next, a robot 100 according to a second embodiment will be described by referring to FIGS. 5A and 5B. FIG. 5A is a schematic cross-sectional plan view of the robot 100 according to the second embodiment. FIG. 5B is an enlarged cross-sectional view seen in a direction of an arrow VB-VB of FIG. 5A.

In the second embodiment described below, the same reference signs are given to the components which are same as or similar to those in the first embodiments described above and the description thereof will not be repeated.

As illustrated in FIGS. 5A and 5B, the structure of the robot 100 according to the second embodiment differs from the structure of the robot 10 according to the first embodiment described above, in that the upper arm 14 includes only one arm portion 140.

As illustrated in FIG. 5A, the robot 100 according to the second embodiment is a so-called cantilevered type. Such a cantilevered robot 100 can be a lightweight robot.

Similar to the first embodiment described above, the robot 100 according to the second embodiment allows the brake 50 to not interfere with the virtual space VS and can therefore pass the cables through the virtual space VS. That is, the space to pass through the cables can be secured in the vicinity of the arms.

The space can be secured in the vicinity of the arm as well as in the first embodiment, such that the interference to other equipment can be prevented, the protection of the cables is not necessary, and the restriction of the movable range of the robot 100 can be eased. In addition, the appearance of the robot 100 is improved, as the cables are not exposed. The workload of the rigging of the cables can be decreased.

In the first and second embodiments described above, the speed reducers 40A, 40B are provided at positions away from the actuators 35, 36 to allow transmission of the rotative power via the belt 43, but the positions of the speed reducers 40A, 40B are not so limited.

A person skilled in the art may easily conceive further effects and variations. Therefore, a wider range of embodiments of the present invention is not limited to the details and representative embodiments as illustrated and described above. Thus, various changes are possible without departing from the overall spirit and range of the invention as defined by the appended claims and the equivalents thereof.

## Claims

1. A robot (10, 100), comprising:
a lower arm (13);
an upper arm (14) supported by the lower arm (13) and including a bottom portion (141) having a through hole (142), and an arm portion (140) extending from the bottom portion (141) avoiding the through hole (142);
an actuator (35, 36) having an output shaft (361) and a rotor (362) coupled to the output shaft (361); and
a brake (50) installed on an end surface of the actuator (35, 36) on the side opposite to the side from which the output shaft (361) projects, and acting on a part of the rotor (362) to brake the actuator (35, 36), wherein
the actuator (35, 36) is arranged on the arm portion (140) on the side of virtual space (VS) with the posture of the actuator (35, 36) being such that the virtual space (VS) and the brake (50) do not overlap each other, the virtual space being obtained by parallel displacement of a region corresponding to the through hole (142) in the extending direction of the arm portion (140).

2. The robot (10) according to claim 1, wherein
the upper arm (14) includes a pair of arm portions (140), and
the actuators (35, 36) arranged on the side of the virtual space (VS) of each of the pair of arm portions (140) are arranged to face each other.

3. The robot (10) according to claim 2, wherein
the actuators (35, 36) are arranged such that the brakes (50) are arranged alternately.

4. The robot (10, 100) according to any one of claims I to 3, further comprising:
a speed reducer (40A) provided on the tip end side of the arm portion (140); and
a belt (43) configured to transmit rotative power of the output shaft (361) of the actuator (35, 36) to the speed reducer (40A).

5. The robot according to any one of claims 1 to 4, further comprising:
a pipe configured to physically separate the inside from the outside of the virtual space (VS).

6. The robot according to any one of claims 1 to 5, wherein
the central axis line of the output shaft (361) passes through the virtual space (VS).

7. The robot according to claim 1, 4, 5, or 6, wherein
the upper arm (14) includes only one arm portion (140).
